# EUROPEAN PATENT APPLICATION

(11) **EP 4 761 420 A1**
(43) Date of publication of application: **17.06.2026**
(21) Application number: 24219950.3
(22) Date of filing: 13.12.2024
(51) Int. Cl.: H04W 72/1268, H04W 28/02, H04W 72/21, H04W 72/56

(54) **CONTENTION-BASED UPLINK TRANSMISSION**

(71) Applicant: Nokia Technologies Oy, 02610 Espoo (FI)
(72) Inventor: ROSA, Claudio, Randers NV (DK); LI, Zexian, Espoo (FI); HOOLI, Kari Juhani, Oulu (FI); TIIROLA, Esa Tapani, Oulu (FI)
(74) Representative: Nokia EPO representatives

(57) **Abstract**

Example embodiments of the present disclosure are directed to contention-based uplink transmission. A method comprises receiving a configuration indicating Configured Grant (CG) uplink data channel resources allocated for the apparatus and two or more Scheduling Request (SR) resources associated with the CG uplink data channel resources; obtaining mapping information between the two or more SR resources and at least one of buffer status information or delay status information of the apparatus, at least one of the buffer status information or the delay status information being to be transmitted on the CG uplink data channel resources; selecting, from the two or more SR resources, at least one SR resource to be used based on the mapping information and at least one of the buffer status information or the delay status information of the apparatus; transmitting at least one SR on the selected at least one SR resource; and performing a transmission including at least one of the buffer status information or the delay status information on the CG uplink data channel resources.

## Description

### FIELD

Various example embodiments of the present disclosure generally relate to the field of telecommunication and in particular, to methods, devices, apparatuses and computer readable storage medium for uplink (UL) transmission.

### BACKGROUND

Enhancements to contention-based UL transmission for more efficient data transmission/reception are expected to be further studied. The main target is to reduce the latency of UL transmissions with preconfigured resources and hence removing one round of signalling exchange between user device and network.

### SUMMARY

The scope of protection sought for various example embodiments is set out by the claims. According to some aspects, there is provided the subject matter of the independent claims. Some further aspects are defined in the dependent claims. The example embodiments and features, if any, described in this specification that do not fall under the scope of the claims are to be interpreted as examples useful for understanding various embodiments.

### BRIEF DESCRIPTION OF THE DRAWINGS

Some example embodiments will now be described with reference to the accompanying drawings, where:
FIG. 1 illustrates an example communication environment in which example embodiments of the present disclosure can be implemented;
FIG. 2 illustrates an example of the configured SR resource and the mapping to CG PUSCH resources;
FIG. 3 illustrates a signaling chart of communication according to some example embodiments of the present disclosure;
FIG. 4 illustrates a signaling chart of communication according to some example embodiments of the present disclosure;
FIG. 5 illustrates a signaling chart of communication according to some example embodiments of the present disclosure;
FIG. 6 illustrates a signaling chart of communication according to some example embodiments of the present disclosure;
FIG. 7 illustrates a simplified block diagram of a device that is suitable for implementing example embodiments of the present disclosure; and
FIG. 8 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second,"..., etc. in front of noun(s) and the like may be used herein to describe various elements, these elements should not be limited by these terms. These terms are only used to distinguish one element from another and they do not limit the order of the noun(s). For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not necessarily indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), 5.5G, the sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other combination of the time, frequency, space and/or code domain resource enabling a communication, and the like. In the following, unless explicitly stated, a resource in both frequency domain and time domain will be used as an example of a transmission resource for describing some example embodiments of the present disclosure. It is noted that example embodiments of the present disclosure are equally applicable to other resources in other domains.

Example embodiments of the present disclosure will be described in detail below with reference to the accompanying drawings.

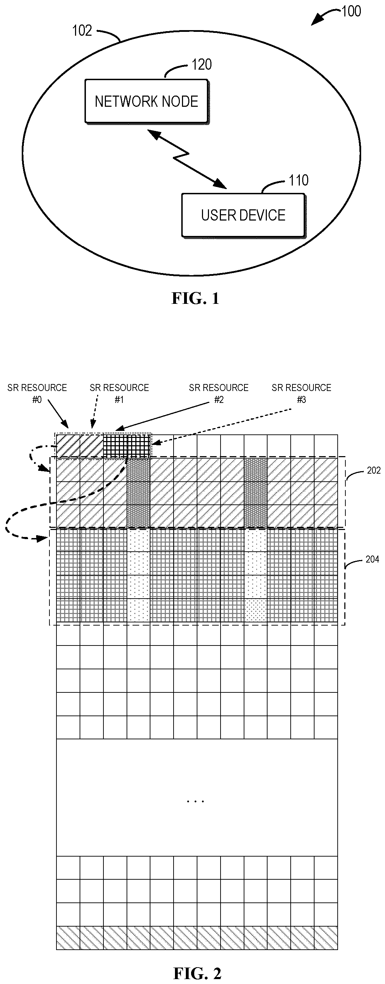

FIG. 1 illustrates an example communication network 100 in which example embodiments of the present disclosure can be implemented. As shown in FIG. 1, the communication network 100 may comprise a user device 110 which may also be, for example, referred to as a terminal device or a UE.

The communication network 100 may further comprise a network node 120, which may be, for example, considered as being a network device or being included in a network device. In some example embodiments, the network device may be discussed as a BS, a gNB, or an eNB.

A serving area provided by the network node 120 is called a cell. The user device 110 may communicate with the network node 120 within the cell 102. The cell currently serving the user device 110 may be considered as a serving cell 102.

In the following, for the purpose of illustration, some example embodiments are described with the user device 110 operating as a terminal device and the network node 120 operating as a network device. However, in some example embodiments, operations described in connection with a terminal device may be implemented at a network device or other device, and operations described in connection with a network device may be implemented at a terminal device or other device.

In some example embodiments, if the user device 110 is a terminal device and network node 120 is a network device, a link from the network node 120 to user device 110 is referred to as a downlink (DL), while a link from the user device 110 to network node 120 is referred to as an UL. In DL, the network node 120 is a transmitting (TX) apparatus (or a transmitter) and the user device 110 is a receiving (RX) apparatus (or a receiver). In UL, the user device 110 is a TX apparatus (or a transmitter) and the network node 120 is an RX apparatus (or a receiver).

It is to be understood that the number of network devices and terminal devices shown in FIG. 1 is given for the purpose of illustration without suggesting any limitations. The communication environment 100 may include any suitable number of network devices and terminal devices.

Communications in the communication environment 100 may be implemented according to any proper communication protocol(s), comprising, but not limited to, cellular communication protocols of the first generation (1G), the second generation (2G), the third generation (3G), the fourth generation (4G), the fifth generation (5G), the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

Contention-based uplink has been discussed in some schemes related to 6G. One of targets is to reduce the latency of UL transmissions with preconfigured resources and hence removing at least one round of signalling exchange between UE and gNB. Another goal might be to avoid the DL control channel burden (related to opportunistic UL scheduling), and the related blind detection burden at the UE. One of the problems of contention-based UL is relatively bad delay when the collision probability is high.

On the other hand, keeping the collision probability low on contention-based UL resources is costly in terms of radio resource utilization (i.e. low capacity). Solutions for contention-based UL transmissions have been studied since the first releases of 4G/LTE.

Non-Orthogonal Multiple Access (NOMA) was thoroughly studied for introduction in NR specifications. A plethora of schemes based on bit or symbol level scrambling or interleaving, sparse Resource Element (RE) mapping, etc. were presented and discussed in standardization meetings. NOMA was finally not adopted in standards mainly because of:
- its impacts on gNB receiver complexity.
- the relatively minor gains shown over simpler schemes such as CG PUSCH with gNB advanced receivers like e.g. Minimum Mean Square Error-Interference Rejection Combining (MMSE-IRC) or Successive Interference Cancellation (SIC).
- especially for some discussed schemes, it required significant enhancements to the specifications, like new Demodulation Reference Signal (DMRS) design to solve collisions of more than 2 UEs.1

Regarding the CG PUSCH:
- One gNB is able to configure two or more UEs with the same CG PUSCH resource that share the same time and frequency resources. The HARQ retransmissions related to the CG PUSCH resources may be triggered dynamically (e.g. using PDCCH)
- UEs can be allocated different DMRS sequences or ports, thus enabling Interference Rejection Combining (IRC)/SIC and/or Multi-User MIMO at the gNB receiver. Different DMRS sequences may correspond to non-orthogonal DMRS between overlapping CG PUSCH resources. An example of that could be usage of different base (CAZAC) sequences for overlapping GC PUSCH resources. Another option is to apply orthogonal DMRS sequences between overlapping CG PUSCH resources. Those may be achieved e.g. by means of cyclic shifts of the CAZAC sequence. Another option is to apply orthogonal cover code (OCC) or IFDM (interleaved frequency division multiplexing). Yet another option is to apply both orthogonal and non-orthogonal DMRS between overlapping CG PUSCH resources.
- A similar approach has been used with 2-step Random Access Channel (RACH) to configure different PUSCH resource units (PRUs) on the same time and frequency resources.

The drawbacks of a mechanism based on legacy CG PUSCH are:
- It requires enhancements to existing DMRS design to support multiplexing of more than 2 UEs on the same frequency/time resources.
- There is no contention resolution or fallback mechanism in case more than 2 UEs are contending for the same frequency/time resources.

Regarding the Carrier Sense Multiple Access with Collision Avoidance (CSMA/CA) and Listen-Before-Talk (LBT):
- CSMA/CA, a.k.a. LBT, is also one possible mechanism supporting contention-based UL transmissions.
- There exist concepts developed at the time when NR in Unlicensed Spectrum (NR-U) was studied in standardization that rely on different CG-PUSCH staring times in combination with LBT to avoid collisions on contention-based resources.

However, the main drawback of a solution based on CSMA/CA is that it clearly does not work efficiently in a macro-cell environment.

Regarding the 2-step RACH, 2-step RACH was introduced in NR specifications. With 2-step RACH:
- A Random Access (RA) preamble is associated with PUSCH resource units (time, frequency, DMRS).
- Same time/frequency resources (i.e. PUSCH occasion (PO)) can be used to serve as different PRUs. On top of time frequency resources (shared by one or more PRUs), PRUs are distinguished by different DMRS ports or sequences.
- There is a deterministic preamble-to-PUSCH resource mapping based on gNB configuration.
- The UE selects the preambles group based on the potential MsgA payload size based on a configured threshold, as well as pathloss, similarly to 4-step RA.

Regarding the SR-assisted CB-PUSCH:
- Available Contention-Based PUSCH (CB-PUSCH) resources are combined with dedicated SR resources.
- SR is "a preamble" for CB-PUSCH. CB-PUSCH is never transmitted without accompanying SR.
- SR-to-CB resource mapping is made in pseudo-random manner known to the UE and eNB .
- SR fallback is always available for the cases when eNB cannot decode CB-PUSCH correctly or when CB-PUSCH is not available.

SR-assisted CB-PUSCH is very similar to 2-step RACH for Radio Resource Control (RRC) connected mode, and assuming the UE has Timing Advance (TA) information.

Though contention-free (at least contention-free for the preamble part) 2-step RACH is already possible in RRC connected mode, 2-step RACH is still designed assuming:
- No data transmission or only Small Data Transmission (SDT) on PUSCH resources.
- Preamble design assumes UE has no timing advance.

SR-assisted CB-PUSCH partially solves the above problems. However, in SR-assisted CB-PUSCH concept, it is not discussed or proposed how the SR multiplexing domain can be best used in this scenario to convey additional UE-assistance information to the gNB.

In example systems (e.g., LTE and NR), the SR multiplexing domain can be used to:
- Multiplex multiple UEs (i.e. each UE is allocated a different SR resource).
- Multiplex multiple Logical Channels (LCHs) per UE (i.e. each UE is allocated multiple SR resources, one per LCH. The UE transmits on the SR resource that corresponds to the LCH that has triggered the SR).

However, using SR-multiplexing domain to convey information on LCH may not be particularly useful with SR-assisted CB-PUSCH. First, if the CB-PUSCH transmission is correctly received, information on the LCH that triggered the SR (i.e. whose data is transmitted on the CB-PUSCH resources) may be redundant. LCH information may also be redundant in case the CB-PUSCH transmission is not correctly received if, for example, the CB-PUSCH resources are restricted for use by a specific LCH.

In accordance with some example embodiments of the present disclosure, there is provided a solution for Contention-Based UL transmission. In this solution, a configuration indicating CG uplink data channel resources and SR resources associated with the CG uplink data channel resources is transmitted from the network node 120 to the user device 110. Upon receiving the configuration, based on mapping information, the transmission on the SR resources and transmission on the CG uplink data channel resources are determined by the user device 110. In this way, transmissions on the SR resources and CG uplink data channel resources can be achieved, and therefore transmission reliability of the CB CG PUSCH can be improved and transmission latency can be reduced, resulting an increase of the throughput of the CG PUSCH.

In general, a new way to use the SR multiplexing domain with SR-assisted CB-PUSCH transmissions to convey additional UE assistance information to the gNB is proposed as mentioned above. In the proposed solution, the resource usage is contention based. In other words two CG PUSCH can have non-overlapping resources (no collision) and/or overlapping resources but different DMRS sequence (MU-MIMO). Alternatively or additionally, two CG PUSCH may have overlapping resources and different DMRS sequence (full collision).

Reference is now made to FIG. 2, which shows an example of the configured SR resources and the mapping to CG PUSCH resources. With reference to FIG. 2, an example process of contention-based uplink (UL) transmission in accordance with some embodiments of the present disclosure will be summarized briefly as follows.

From the perspective of the user device 110, the user device 110 may be configured with Contention-Based (CB) CG-PUSCH resources and more than one dedicated associated SR resources. The user device 110 may also be configured with instructions/rules to associate each one of the more than one SR resources to one characteristic or one combination of characteristics of the corresponding CB CG-PUSCH transmission.

In some embodiments, the term "characteristic(s) of the corresponding CB CG-PUSCH transmission" mentioned above may be referred to as one or more transmission parameters to be used by the user device 110 for the CB CG-PUSCH transmission. For example, the one or more transmission parameters may include the Modulation and Coding Scheme (MCS) of the data transmission on the corresponding CB CG-PUSCH resource, a transport block size (TBS) of the data transmission on the corresponding CB CG-PUSCH resource, and/or Transmission Configuration Indicator (TCI) state. The transmission parameters may be referred to as characteristic information.

In some other embodiments, the term "characteristic(s) of the corresponding CB CG-PUSCH transmission" mentioned above may be associated with a data type to be transmitted on the corresponding CB CG-PUSCH transmission. For example, the "characteristic" may be linked to buffer status information or delay status information.

In some other embodiments, the term "characteristic(s) of the corresponding CB CG-PUSCH transmission" mentioned above may be associated with a presence or an absence of a transmission on the corresponding CB CG-PUSCH transmission.

It is also possible that any other suitable UE's information for the corresponding CB CG-PUSCH transmission may also be considered as "characteristic(s) of the corresponding CB CG-PUSCH transmission".

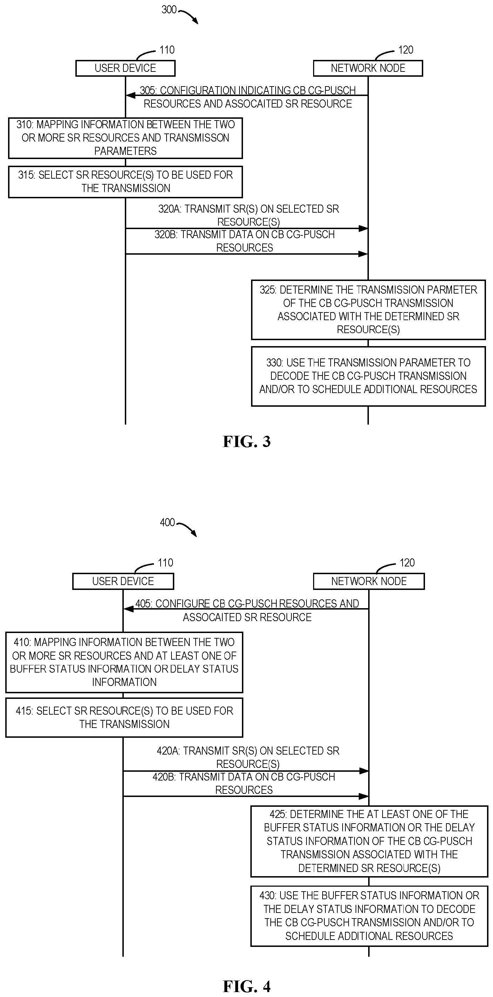

More details of a mapping between the characteristic(s) and one or more SR resource will be described in detail with reference to FIGs. 3-6.

In some embodiments, the term "CG PUSCH resources" may be considered as CB CG-PUSCH resources. In some embodiments, the user device 110 may be configured with at least two (parallel) CG uplink data channel resources. Each of the (parallel) CG uplink data channel resources occupy a unique combination of the following parameters including at least one of: frequency domain resource allocation, time domain resource allocation, spatial domain resource allocation, or demodulation reference signal configuration.

An example of the configured SR resource and CG PUSCH resource is shown in FIG. 2, where the user device 110 may be configured with 2 SR resources (e.g. SR resource #0 and #1, or SR resource #2 and #3) mapping to the same CG PUSCH resource (e.g. CG PUSCH resource 202 or CG PUSCH resource 204). Specifically, as shown in FIG. 2, the CG-PUSCH resources in the area 202 are configured with the SR resource #0 and #1, and the CG-PUSCH resources in the area 204 are configured with the SR resource #2 and #3. For example, if the SR is transmitted on SR resource #0, SR resource #1, or SR resources #0 and #1, the associated CG-PUSCH resources are of area 202.

Then the user device 110 may determine if it may perform a transmission on the configured CB CG-PUSCH resources. If so, the user device 110 may determine at least one characteristic of the CB CG-PUSCH transmission.

Then the user device 110 may select at least one of the more than one associated SR resources that is associated with the at least one characteristic of the CB CG-PUSCH transmission.

Finally, the user device 110 may transmit a data (and/or control information) transmission on the CB CG-PUSCH resources and at least one scheduling request (SR) on the selected SR resource(s).

From the perspective of the network node 120, the network node 120 may firstly determine the SR resource(s) the user device 110 has transmitted on. Based on this, the network node 120 may determine at least one characteristic of the CB CG-PUSCH transmission associated with the determined SR resource.

Then the network node 120 may use information on the characteristic of the CB CG-PUSCH transmission carried over the SR resource to decode the CB CG-PUSCH transmission, and/or to schedule additional resources to the user device 110.

Reference is now made to FIG. 3, which shows a signaling chart 300 explaining methods for communication according to some example embodiments of the present disclosure. As shown in FIG. 3, the methods may be performed by more than two apparatuses such as a user device 110 and a network node 120. For the purpose of discussion, reference is made to FIGs. 1 and 2 to describe the signaling chart 300.

The apparatuses (e.g., the user device 110 or the network node 120) may comprise at least one processor and at least one memory storing instructions that, when executed by the at least one processor, cause the apparatus to perform the embodiments (e.g., methods) disclosed in FIG. 3 and hereinafter.

The apparatuses (e.g., the user device 110 or the network node 120) may comprise one or more means to perform the embodiments (e.g., methods) disclosed in FIG. 3 and hereinafter.

The apparatuses may comprise a chip or a chip set comprising two or more chips.

In the solution shown in FIG. 3, different SR resources may be linked to different transmission parameters.

As shown in FIG. 3, at 305, the network node 120 may transmit, to a user device 110, a configuration indicating CG uplink data channel resources allocated for the user device 110. The CG uplink data channel resources mentioned herein may be the CG PUSCH resources and/or the CB CG PUSCH resources.

At 305, the user device 110 receives a configuration indicating CG uplink data channel resources allocated for the user device 110 and two or more SR resources associated with the CG uplink data channel resources.

In some embodiments, the configuration of the SR resources and the CG uplink data channel resources may be transmitted in a single message or signaling, while in some other embodiments, the configuration may also be transmitted in multiple separate messages.

In some embodiments, the CG uplink data channel resources include at least two CG uplink data channel resources. The apparatuses may be configured with at least two CG uplink data channel resource. the at least two CG uplink data channel resources may occupy a combination of the following parameters including at least one of time domain resrouce allocation, frequency domain resource allocation, spatial domain resource allocation, or demodulation reference signal domain configuration.

At 310, the network node 120 may transmit, to the user device, mapping information between the two or more SR resources and transmission parameters. In some embodiments, the mapping information may be hardcoded in the specification, thus the UE may be configured with one or more SRs associated with CG PUSCH resources without additional signaling.

At 310, the user device 110 obtains mapping information between the two or more SR resources and transmission parameters related to at least one of Modulation and Coding Schemes (MCSs), Transport Block Sizes (TBSs) or Transmission Configuration Indicator (TCI) states. The transmission parameters may be associated with a transmission on the CG uplink data channel resources. In other words, different SR resources may be used to indicate the MCS or the TBS or the TCI state used by the user device 110 for transmission on the CG uplink data channel resources.

Furthermore, in some embodiments, the mapping information may be comprised in the configuration of 305 mentioned above. That is, the mapping information may be transmitted from the network node 120 to the user device 110 along with the configuration of the CG uplink data channel resources and the associated two or more SR resources. In this situation, the action 310 and 305 may be considered as one action.

After obtaining the configuration and the mapping information, at 315, the user device 110 selects, from the two or more SR resources, at least one SR resource to be used based on the mapping information and the transmission parameters.

Since the SR resources have mapping relationships with the transmission parameters, the user device 110 may firstly determine the transmission parameters associated with a transmission on the CG uplink data channel resources, then the SR resources to be used may be further selected based on the transmission parameters.

Regarding the selection of the SR resources having mapping relationships with the MCS, in some embodiments, a first SR resource of the two or more SR resources may be linked to a first MCS value and a second SR resource of the two or more SR resources may be linked to a second MCS value. The at least one SR resource may be selected from the two or more SR resources including the first SR resource and the second SR resource. The selected at least one SR resource may include at least one of the first SR resource or the second SR resource.

In some example embodiments, the first MCS value as mentioned above is a higher MCS value than the second MCS value.

For example, the first MCS value may be MCS#1, which corresponds to the MCS of 16 Quadrature Amplitude Modulation (QAM) ¾, and the first SR resource may be the SR resource#0. Moreover, the second MCS value may be MCS#2, which corresponds to the MCS of Quadrature Phase Shift Keying (QPSK) ¾, and the second SR resource may be the SR resource#1. It should be noted that the CG PUSCH resources associated with the two or more SR resources could be also of different sizes (in terms of the number of resource elements).

For example, the user device 110 may select the SR resource#1 for transmission, and the SR resource#1 corresponds to the MCS of QPSK ¾.

In this case, the user device 110 may determine at least one SR resource to be used based on the MCS value to be used for the CG uplink data channel transmission. That is, if MCS#1 is to be used for CG uplink data channel transmission, the SR resource#0 may be selected by the user device 110, while if MCS#2, is to be used for the transmission, the SR resource#1 may be selected by the user device 110.

Regarding the selection of the SR resources having mapping relationships with the TBS, in some embodiments, a first SR resource of the two or more SR resources may be linked to a first TBS value and a second SR resource of the two or more SR resource may be linked to a second TBS value. The selected at least one SR resource may include at least one of the first SR resource or the second SR resource

For example, the first SR resource may be the SR resource#0, which may correspond to a smaller TBS value, and the second SR resource may be the SR resource#1, which may correspond to a larger TBS value.

In this case, the user device 110 may determine at least one SR resource to be used based on the TBS value for the CG uplink data channel transmission. That is, if the user device uses TBS value#1, the SR resource#0 may be selected by the user device 110, while if the used device uses TBS value#2, the SR resource#1 may be selected by the user device 110.

Regarding the selection of the SR resources having mapping relationships with the TCI states, in some embodiments, different SR resources are used to indicate the TCI state that is used in the derivation of UL spatial filter for CB CG-PUSCH transmission.

In some embodiments, a first SR resource of the two or more SR resources may be linked to a first TCI state value and a second SR resource of the two or more SR resource may be linked to a second TCI state value. The selected at least one SR resource may include at least one of the first SR resource or the second SR resource.

For example, the first SR resource may be the SR resource#0, which is linked to a first TCI state value of TCI state#1. The TCI state#! may indicate that the user device 110 uses the primary TCI state indicated to the user device 110 for the derivation of the UL spatial filter for CB CG-PUSCH transmission on CG uplink data channel resources. The second SR resource may be the SR resource#1, which is linked to a second TCI state value of TCI state#2. The TCI state#2 may indicate that the user device 110 uses the secondary TCI state indicated to the user device 110 for transmission on the CG uplink data channel resources.

Specifically, the primary TCI state may have a source Reference Signal (RS) associated with a narrower beam (e.g., CSI-RS) while the secondary TCI state may have a source RS, e.g. Synchronization Signal Block (SSB), that is associated with a wider beam at gNB. Wider beam can be more robust against e.g. user device 110 rotations or movement that may have occurred after receiving the indication of the primary TCI state.

The user device 110 may choose to use the secondary TCI e.g. based on measurements indicating lower link quality for the source RS of the primary TCI state.

In this case, the user device 110 may determine at least one SR resource to be used based on the TCI state associated with the CG uplink data channel transmission. That is, if the used device uses TCI state#1, the SR resource#0 may be selected by the user device 110, while if the used device uses TCI state#2, the SR resource#1 may be selected by the user device 110.

In some example embodiments, the first TCI value as mentioned above may indicate a first source reference signal transmitted using a narrow beam, and the second TCI value may indicate a second source reference signal transmitted using a wide beam.

It is also possible that mapping information indicating that the two or more SR resources are linked to more than one transmission parameters. For example, the two or more SR resources may be associated with both MCS value and TCI state values.

Regarding the selection of the SR resources having mapping relationships with the MCS values and TCI state values, in some embodiments, different SR resources are used to indicate the TCI state that is used in the derivation of UL spatial filter for CB CG-PUSCH transmission.

In some embodiments, a first SR resource of the two or more SR resources is linked to a first MCS value and a first TCI state value and a second SR resource of the two or more SR resource is linked to a second MCS value and a second TCI state value. Meaning that the SR resources may be linked to a combination of MCS values and TCI states. In this case, the selected at least one SR resource may include at least one of the first SR resource or the second SR resource.

For example, the first SR resource may be the SR resource#0, which is linked to the MCS#1 and TCI state value of TCI state#1. The second SR resource may be the SR resource#1, which is linked to the MCS#2 and TCI state value of TCI state#2.

For example, the user device 110 may be configured with different MCS values associated with the primary and secondary TCI state (corresponding to the TCI state#! and the TCI state#2 respectively). E.g. a lower, more robust MCS value may be associated with the secondary TCI state, meaning that user device 110 uses more robust MCS in the transmission of the corresponding CB CG-PUSCH.

In this case, the user device 110 may determine at least one SR resource to be used based on the TCI state and the MCS of the CG uplink data channel transmission. That is, if the used device uses TCI state#1 and MCS#1, the SR resource#0 may be selected by the user device 110, while if the used device uses TCI state#2 and MCS#2, the SR resource#1 may be selected by the user device 110.

In some example embodiments, the first MCS value as mentioned above is a higher MCS value than the second MCS value.

In some example embodiments, the first TCI value as mentioned above may indicate a first source reference signal transmitted using a narrow beam, and the second TCI value may indicate a second source reference signal transmitted using a wide beam.

Then, at 320A, after the SR resource selection, the user device 110 transmits at least one SR on the at least one selected SR resource.

At 320A, the network node 120 receives at least one SR on at least one SR resource of the two or more SR resources.

At 320B, the user device 110 performs a transmission on the CG uplink data channel resources using the transmission parameters.

At 320B, the network node 120 receives a transmission on the CG uplink data channel resources associated with the at least one SR resource.

In this example, through the SR transmitted on the SR resource#1, the network node 120 may be informed of the corresponding one or more transmission parameters of the incoming transmission.

For example, then the user device 110 may transmit the SR corresponding to the MCS of QPSK ¾ to the network node 120 on the SR resource#1 and the user device 110 may perform the transmission on the corresponding CG uplink channel resources with a MCS of QPSK¾.

In this situation, then, at 325, the network node 120, may determine, after receiving the SR request on the at least one selected SR resource, based on the at least one selected SR resource and the mapping information, transmission parameter(s) at least one of an MCS value of the transmission on the CG uplink data channel resources, or a TBS value of the transmission on the CG uplink data channel resources, or a TCI state value used for the transmission on the CG uplink data channel resources.

Then, at 330, the network node 120 decodes the transmission at least based on the at least one SR resource and the mapping information. In this case, the network node 120 may use the determined transmission parameter(s) associated with the at least one SR resource. For example, after determining the transmission parameters, the network node 120 may proceed with demodulation and decoding of the CB CG-PUSCH transmission (i.e., the transmission on the CG uplink data channel resources).

Additionally or optionally, the network node 120 may schedule additional resources for the transmission based on the determined transmission parameters.

In order to implement the embodiments or the examples above, a computer program comprising instructions, which when executed by the apparatus (e.g., the user device 110 or the network node 120), may cause the apparatus to perform the explained above method (or embodiments). In this case, a computer readable storage medium may have stored thereon the computer program. The computer readable storage medium may be a non-transitory computer readable medium.

Reference is now made to FIG. 4, which shows a signaling chart 400 explaining methods for communication according to some example embodiments of the present disclosure. As shown in FIG. 4, the method may be performed by more than two apparatuses such as a user device 110 and a network node 120. For the purpose of discussion, reference is made to FIGs. 1 and 2 to describe the signaling chart 400.

The apparatuses (e.g., the user device 110 or the network node 120) may comprise at least one processor and at least one memory storing instructions that, when executed by the at least one processor, cause the apparatus to perform the embodiments (e.g., methods) disclosed in FIG. 4 and hereinafter.

The apparatuses (e.g., the user device 110 or the network node 120) may comprise one or more means to perform the embodiments (e.g., methods) disclosed in FIG. 4 and hereinafter.

The apparatuses may comprise a chip or a chip set comprising two or more chips.

In the solution shown in FIG. 4, different SR resources may be linked to at least one of buffer status information or delay status information.

As shown in FIG. 4, at 405, the network node 120 transmits, to a user device 110, a configuration indicating CG uplink data channel resources allocated for the user device 110. The CG uplink data channel resources mentioned herein may be the CG PUSCH resources and/or the CB CG PUSCH resources.

At 405, the user device 110 receives a configuration indicating CG uplink data channel resources allocated for the apparatus and two or more Scheduling Request, SR, resources associated with the CG uplink data channel resources.

Moreover, the configuration may also indicate two or more SR resources associated with the CG uplink data channel resources.

In some embodiments, the configuration of the SR resources and the CG uplink data channel resources may be transmitted in a single message or signaling, while in some other embodiments, the configuration may also be transmitted in multiple separate messages.

In some embodiment, at 410, the network node 120 may provide, to the user device 110, mapping information between the two or more SR resources and at least one of buffer status information or delay status information to be received on the CG uplink data channel resources.

At 410, the user device 110 obtains mapping information between the two or more SR resources and at least one of buffer status information or delay status information of the user device 110. At least one of the buffer status information or the delay status information may be to be transmitted on the CG uplink data channel resources.

In some embodiments, the buffer status information or the delay status information comprises one or more buffer status values associated with at least one of a buffer size of buffered data or a remaining time of buffered data.

In other words, different SR resources are used to indicate the buffer status information corresponding to at least one of the BSR or DSR transmitted on the CG uplink data channel resources (i.e., CB CG-PUSCH resources).

In some embodiments, the at least one of the buffer status information or the delay status information is included in at least one of a Buffer Status Report (BSR) or a Delay Status Report (DSR).

Furthermore, in some embodiments, the mapping information may be comprised in the configuration mentioned above. That is, the mapping information may be transmitted from the network node 120 to the user device 110 along with the configuration of the CG uplink data channel resources and the associated two or more SR resources. In this situation, the actions 410 and 405 may be considered as one action.

After receiving the configuration and the mapping information, at 415, the user device 110 selects, from the two or more SR resources, at least one SR resource to be used based on the mapping information and at least one of the buffer status information or the delay status information of the user device 110.

Since the SR resources have mapping relationships, the user device 110 may determine the at least one SR resources to be used for transmission based on the buffer size value (for example the value in the buffer state (BS) field) in the BSR, the remaining time value (for example the value in the remaining time (RT) field) in the DSR and one or more thresholds according to predetermined criteria.

In some example embodiments, a first SR resource of the two or more SR resources may be linked to a first buffer size value exceeding a first (configurable) threshold and a second SR resource of the two or more SR resources may be linked to a second buffer size value that equals to or is lower than the first threshold. The selected at least one SR resource may include at least one of the first SR resource or the second SR resource.

Regarding the scenario that a buffer size value is used to determine the selected SR resources, in some embodiments, a SR resource (e.g., SR resource#2 of Fig, 2) of the two or more SR resources is linked to a first buffer size value exceeding a first threshold which could be configured to the user device or fixed in the specification.

For example, if the value of BS field in BSR > threshold1, the user device 110 may transmit SR on SR resource#2.

In some other embodiments, a SR resource (e.g., SR resource#1) of the two or more SR resources is linked to a second buffer size value that equals to or is lower than the first threshold (threshold1).

For example, if the value of BS field in BSR ≤ threshold!, the user device 110 may transmit the SR on SR resource#1.

That is, the at least one SR resource may be selected from the SR resource#1 and SR resource#2. In this case, the SR resource#1 and the SR resource#2 are associated with different CG uplink data channel resources from each other.

In some other example embodiments, a first SR resource of the two or more SR resources may be linked to a first remaining time value exceeding a second threshold and a second SR resource of the two or more SR resources may be linked to a second remaining time value that equals to or is lower (or shorter) than the second threshold. The selected at least one SR resource includes at least one of the first SR resource or the second SR resource.

Regarding the scenario that a remaining time value is used to determine the selected SR resources, in some embodiments, a SR resource (e.g., SR resource#2) of the two or more SR resources is linked to a first remaining time value exceeding a second threshold.

For example, if the value of RT field in DSR > threshold2, the user device 110 may transmit the SR on the SR resource#2.

In some other embodiments, a SR resource (e.g., SR resource#1) of the two or more SR resources is linked to a second remaining time value that equals to or is lower than the second threshold.

For example, if the value of RT field in DSR ≤ threshold2, the user device 110 may transmit SR on SR resource#1.

That is, the at least one SR resource may be selected from the SR resource#1 and SR resource#2. In this case, the SR resource#1 and the SR resource#2 are associated with different CG uplink data channel resources from each other.

In some embodiments, the buffer status information may comprise one or more buffer status values associated with at least one of the following:
- a buffer size of buffered data,
- a remaining time of buffered data,
- a minimum remaining time associated with buffered data from logical channels, LCHs or logical channel groups, LCGs,
- a minimum remaining time associated with buffered data from an LCH or an LCG with the highest priority that is transmitted on the CG uplink data channel resources, or
- a buffer size prior to assembly of the transport block transmitted on the CG uplink data channel resources.

The at least one of the buffer status information or the delay status information may comprise one or more buffer status values associated with at least one of a minimum remaining time associated with a buffer size of buffered data from logical channels (LCHs) or logical channel groups (LCGs), a remaining time of buffered data, a minimum remaining time associated with buffered data from an LCH or an LCG with the highest priority that is transmitted on the CG uplink data channel resources, or a buffer size prior to assembly of the transport block transmitted on the CG uplink data channel resources.

For example, in the implementation of this embodiment, instead of indicating the value of the remaining time signaled in the DSR, the SR may indicate the value of the minimum remaining time associated with the data from all LCHs/LCGs or from the LCH/LCG with the highest priority that is transmitted on the CB CG-PUSCH resources.

In yet another implementation, instead of indicating the value of the buffer size signaled in the BSR, the SR may indicate the value of the buffer size prior to assembly of the Transmission Block (TB) transmitted on the CB CG-PUSCH resources.

It should be noted that the BSR or DSR transmitted on CG uplink data channel resources (for example the CB CG-PUSCH resources) may contain more than one buffer states and/or remaining time field/values.

In this case, the user device 110 may determine the buffer state and/or remaining time value to be compared with the configured threshold value(s) for the selection of the corresponding SR resources (i.e. threshold1 and/or threshold2) based on a combination of the more than one buffer state and/or remaining time field/value. e.g., the sum of the buffer state values and the minimum of the remaining time values.

In addition, another embodiment can be that the selection of the SR resource is determined by the buffer state and/or remining time field/value from the configured LCH(s)/LCG(s) only.

In some embodiments, the first SR resource of the two or more SR resources may be associated with at least one of a first buffer size value or a first remaining time value. The second SR resource of the two or more SR resources may be associated with at least one of a second buffer size value or a second remaining time value. The selected at least one SR resource may include at least one of the first SR resource or the second SR resource.

In yet another example embodiments, a first SR resource of the two or more SR resources is linked to a first buffer size value exceeding a first threshold and a first remaining time value exceeding a second threshold, a second resource of the two or more SR resources is linked to a second buffer size value that equals to or is lower than the first threshold and a second remaining time value that equals to or is lower than the second threshold, a third SR resource of the two or more SR resources is linked to the first buffer size value exceeding the first threshold and the second remaining time value that equals to or is lower than the second threshold and a fourth SR resource of the two or more SR resources is linked to the second buffer size value that equals to or is lower than the first threshold and the first remaining time value exceeding the second threshold. In this case, the selected at least one SR resource includes one of the first SR resource, the second SR resource, the third SR resource and the fourth SR resource.

For the scenario where more than one buffer size values and more than one remaining time values are used to determine the SR resources for transmission, in some embodiments, in the case with DSR, the thresholds for selecting one SR resource may be based on both buffer size and remaining time.

In some embodiments, a SR resource (e.g., SR resource#4) of the two or more SR resources is linked to a first buffer size value exceeding a first threshold and a first remaining time value exceeding a second threshold.

For example, if the value of BS field in BSR > threshold1 and the value RT field in DSR > threshold2, the user device 110 may transmit the SR on the SR resource#4.

In some embodiments, a SR resource (e.g., SR resource#1) of the two or more SR resources is linked to a second buffer size value that equals to or is lower than the first threshold and a second remaining time value that equals to or is lower than the second threshold.

For example, if the value of BS field in BSR ≤ threshold! and the value of RT field in DSR ≤ threshold2, the user device 110 may transmit the SR on the SR resource#1.

In some embodiments, a SR resource (e.g., SR resource#2) of the two or more SR resources is linked to the first buffer size value exceeding the first threshold and the second remaining time value that equals to or is lower than the second threshold.

For example, if the value of BS field in BSR > threshold1 and the value of RT field in DSR ≤ threshold2, the user device 110 may transmit the SR on the SR resource#2.

In some embodiments, a SR resource (e.g., SR resource#3) of the two or more SR resources is linked to the second buffer size value that equals to or is lower than the first threshold and the first remaining time value exceeding the second threshold.

For example, if the value of BS field in BSR ≤ threshold1 and the value of RT field in DSR > threshold2, the user device 110 may transmit the SR on the SR resource#3.

That is, the at least one SR resource may be selected from the SR resource#0, SR resource#1, SR resource#2 and SR resource#3.

After selecting the at least one SR resources to be used for the transmission based on the above mentioned process, at 420A, the user device 110 transmits at least one SR on the at least one SR resource.

At 420A, the network node 120 receives at least one SR on at least one SR resource of the two or more SR resources.

At 420B, the user device 110 performs a transmission including at least one of the buffer status information or the delay status information on the CG uplink data channel resources.

At 420B, the network node 120 receives a transmission including at least one of the buffer status information or the delay status information of the user device on CG uplink data channel resources associated with the at least one SR resource.

Then, at 425, the network node 120, may determine, based on the at least one SR resource and the mapping information, at least one of the buffer status information or the delay status information included in the incoming transmission.

As an example, the network node 120 may determine information on the buffer size of the buffered data and/or the remaining time of buffered data.

Based on the information on the buffer size of the buffered data and/or the remaining time of buffered data, at 430, the network node 120 may schedule additional resources for further transmission of at least a part of the buffered data, for example, whose remaining time lower than a threshold, to avoid data discarding at the buffer of the used device 110.

It should be noted that the transmission from the user device 110 may not always be received correctly, the transmission may be lost due to noise or interference factor or simply due to the contention factor.

In some embodiments, if the at least one of buffer status information or delay status information on the CG uplink data channel resources is not correctly received, the network node 120 may schedule, based on the at least one SR resource and the mapping information, further uplink data channel resources for the user device 110 to transmit buffered data.

More specifically, in case the CB CG PUSCH transmission is not correctly received, the network node 120 may use buffer state and/or the remaining time information associated with the SR resources selected for transmission in future scheduling decisions, e.g. by prioritizing scheduling resources to user devices (i.e., the user device 110) with larger buffer size and/or lower remaining time.

In order to implement the embodiments or the examples of Fig. 4, a computer program comprising instructions, which when executed by the apparatus (e.g., the user device 110 or the network node 120), may cause the apparatus to perform the explained above method (or embodiments). In this case, a computer readable storage medium may have stored thereon the computer program. The computer readable storage medium may be a non-transitory computer readable medium.

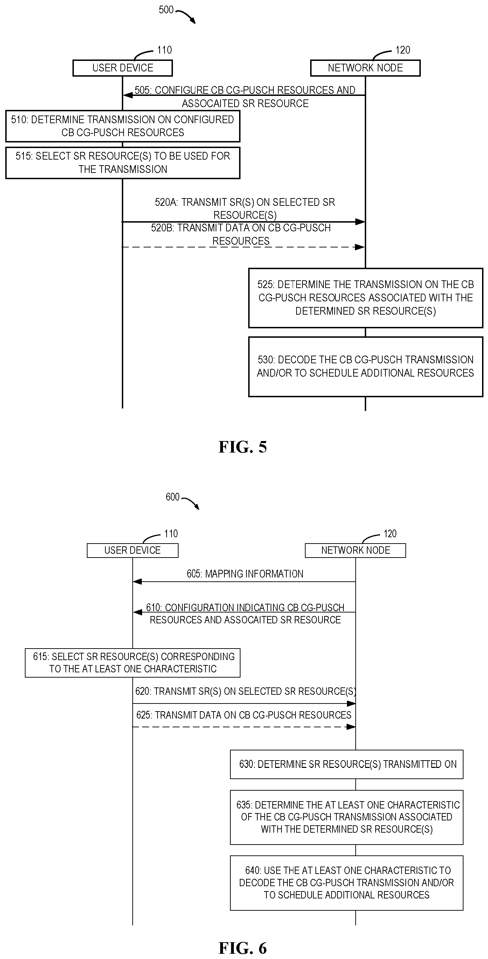

Reference is now made to FIG. 5, which shows a signaling chart 500 for communication according to some example embodiments of the present disclosure. As shown in FIG. 5, the signaling chart 500 involves two or more apparatus, such as a user device 110 and a network node 120. For the purpose of discussion, reference is made to FIGs. 1 and 2 to describe the signaling chart 500.

The apparatuses (e.g., the user device 110 or the network node 120) may comprise at least one processor and at least one memory storing instructions that, when executed by the at least one processor, cause the apparatus to perform the embodiments (e.g., methods) disclosed in FIG. 5 and hereinafter.

The apparatuses (e.g., the user device 110 or the network node 120) may comprise one or more means to perform the embodiments (e.g., methods) disclosed in FIG. 5 and hereinafter.

The apparatuses may comprise a chip or a chip set comprising two or more chips.

In the solution shown in FIG. 5, a SR resource may be linked to a situation that the transmission on the CG uplink data channel resources is present or a situation that the transmission on the CG uplink data channel resources is absent.

As shown in FIG. 5, at 505, the network node 120 transmits, to a user device 110, a configuration indicating CG uplink data channel resources allocated for the user device 110 and two or more SR resources associated with the CG uplink data channel resources. The CG uplink data channel resources mentioned herein may be at least one of the CG PUSCH resources or the CB CG PUSCH resources.

At 505, the user device 110 receives a configuration indicating CG uplink data channel resources allocated for the apparatus and two or more SR resources associated with the CG uplink data channel resources.

Moreover, the configuration may also indicate two or more SR resources associated with the CG uplink data channel resources.

At 510, the user device 110 may determines whether to transmit on the configured CG uplink data channel resources.

In some embodiments, the user device 110 may determine that the transmission on the CG uplink data channel resources is present based on at least one of the following:
- a status of uplink data to be transmitted,
- a measurement related to an uplink channel quality, or
- an occurrence of one or more pre-defined events.

For example, in some embodiments, the user device 110 may decide whether to include PUSCH data (or whether to send just SR). The decision may be based on the UL data to be transmitted (such as the amount of data in buffer, or traffic type i.e., the status of uplink data to be transmitted).

In some embodiments, the apparatus (e.g., the user device 110 or the network node 120) may be configured with at least two CG uplink data channel resources. The at least two CG uplink data channel resources may occupy a combination of the following parameters including at least one of: a frequency domain resource allocation, a time domain resource allocation, a spatial domain resource allocation, or a demodulation reference signal configuration.

It is also possible that the user device 110 may determine that the transmission on the CG uplink data channel resources is present based on one or more measurements related to an uplink channel quality. The measurements described herein may relate to propagation conditions (e.g. Reference Signal Received Power (RSRP), reference signal received quality (RSRQ) or Received Signal Strength Indication (RSSI), etc.). For example, if the uplink channel quality is getting worse or already very bad, the transmission on the CG uplink data channel resource may be dropped.

Additionally, the transmission on the CG uplink data channel resource may be triggered only when one or more pre-defined events occur. The pre-defined events mentioned herein may refer to predefined scenarios defined for the cases when PUSCH data can (or should) be present. These scenarios (or events) can be based on UL data to be transmitted and/or predefined UE measurements related to propagation conditions. These could be part of the configuration (such as RRC for CG PUSCH).

A benefit of the user device 110 having a decision on whether to transmit data on certain CG uplink data channel resources is that contention based PUSCH can be used only for the scenarios (or events) that are 1) seen as necessary for the system operation and/or 2) have good possibility to be decoded correctly after the 1^{st} transmission (with the predefined MCS).

This kind of functionality will reduce the collision probability for CB-PUSCH with given number of CB-PUSCH resources.

Referring back to Fig. 5, at 515, the user device 110 selects, from two or more SR resources, at least one SR resource to be used based on whether a transmission on the CG uplink data channel resources is present.

In some embodiments, if the user device 110 may determine that the transmission on the CG uplink data channel resources is present, the user device 110 may select, from the two or more SR resources, a first SR resource linked to a situation that the transmission on the CG uplink data channel resources is present.

In some other embodiments, if the user device 110 may determine that the transmission on the CG uplink data channel resources is absent, the user device 110 selects, from the two or more SR resources, a second SR resource linked to a situation that the transmission on the CG uplink data channel resources is absent.

Then, at 520A, the user device 110 transmits at least one SR on the selected at least one SR resource. For example, if the user device determines the CG uplink data channel resource is present, the user device 110 may transmit the SR on the first SR resource. If the user device determines the CG uplink data channel resource is absent, the user device 110 may transmit the SR on the second SR resource.

At 520A, the network node 120 receives at least one SR on at least one SR resource of the two or more SR resources.

In a case wherein the transmission on the CG uplink data channel resources is present, at 520B, the user device 110 may perform a transmission on the CG uplink data channel resources.

At 520B, network device 120 may receive the transmission on the CG uplink data channel resources if the transmission is present.

After receiving the at least one SR on the selected at least one SR resource, at 525, the network node 120 determines whether a transmission on the CG uplink data channel resources is present or absent based on the at least one SR resource.

In some embodiments, if the network node 120 determines that the at least one SR resource is linked to a situation that the transmission is present on the CG uplink data channel resources, the network node 120 may determine that the transmission on the CG uplink data channel resources is present.

In some other embodiments, if the network node 120 determines that the at least one SR resource is linked to a situation that the transmission is absent on the CG uplink data channel resources, the network node 120 may determine that the transmission on the CG uplink data channel resources is absent.

After determining whether the transmission is present on the CG uplink data channel resources, at 530, the network node 120 may decode the transmission.

It should be noted that the above-mentioned process of determining whether the transmission is present on the CG uplink data channel resources could be supported also with a single SR resource.

The difference (compared to the scenario with two or more SR resources) is that in the case of single SR resource, it may not be possible for the network node 120 to differentiate the following scenarios 1) the user device 110 sends only SR meaning that the PUSCH data is absent and 2) the user device 110 sends both SR and PUSCH data, but the network node 120 did not detect PUSCH correctly (e.g. due to collision).

In order to implement the embodiments or the examples of Fig. 5, a computer program comprising instructions, which when executed by the apparatus (e.g., the user device 110 or the network node 120), may cause the apparatus to perform the explained above method (or embodiments). In this case, a computer readable storage medium may have stored thereon the computer program. The computer readable storage medium may be a non-transitory computer readable medium.

Reference is now made to FIG. 6, which shows a signaling chart 600 for communication according to some example embodiments of the present disclosure. As shown in FIG. 6, the signaling chart 600 involves two or more apparatuses, such as a user device 110 and a network node 120. For the purpose of discussion, reference is made to FIGs. 1 and 2 to describe the signaling chart 600.

The apparatuses (e.g., the user device 110 or the network node 120) may comprise at least one processor and at least one memory storing instructions that, when executed by the at least one processor, cause the apparatus to perform the embodiments (e.g., methods) disclosed in FIG. 6 and hereinafter.

The apparatuses (e.g., the user device 110 or the network node 120) may comprise one or more means to perform the embodiments (e.g., methods) disclosed in FIG. 6 and hereinafter.

The apparatuses may comprise a chip or a chip set comprising two or more chips.

In the solution shown in FIG. 6, a SR resource is linked to different characteristics information related to the transmission.

As shown in FIG. 6, at 605, the network node 120 transmits, to a user device 110, mapping information between two or more SR resources and at least one characteristic information associated with a transmission on a CG uplink data channel resource, the CG uplink data channel resource being associated with the two or more SR resources.

At 605, the user device 110 receives mapping information between two or more SR resources and at least one characteristic information associated with a transmission on a CG uplink data channel resource, the CG uplink data channel resource being associated with the two or more SR resources.

At 610, the network node 120 may transmit a configuration indicating CG uplink data channel resources allocated for the user device 110 and the two or more SR resources associated with the CG uplink data channel resources. The configuration may also indicate two or more SR resources associated with the CG uplink data channel resources.

In some embodiment, at 610, the user device 110 may receive a configuration indicating CG uplink data channel resources allocated for the user device 110 and the two or more SR resources associated with the CG uplink data channel resources.

It should be noted that in the solution shown in FIG. 6, the configuration of the SR resources and the CG uplink data channel resources is transmitted in a single message or signaling.

At 615, the user device 110 selects, from the two or more SR resources, at least one SR resource to be used based on the mapping information and the at least one characteristic information.

The selection of the SR resources and the transmission on the CG uplink data channel resources are described above with reference to FIG. 3 to FIG. 5, which is not repeated herein.

The main difference for the scheme described in combination with the FIG. 6 is that, in some embodiments, the user device 110 may receive mapping information between two or more SR resources and at least one characteristic information associated with a transmission on a CG uplink data channel resource. The above-mentioned CG uplink data channel resource is associated with the two or more SR resources.

Regarding the characteristic information, the characteristic information may indicate at least one of at least one MCS value of the transmission on the CG uplink resources, or at least one TBS value of the transmission on the CG uplink resources, or at least one TCI state used for the transmission on the CG uplink resources, or at least one buffer status values included in at least one of transmission of buffer status information or delay status information on the CG uplink resources, or a presence of the transmission of data on the CG uplink resources, or an absence of the transmission of data on the CG uplink resources.

Regarding the SR resources mentioned above, the two or more SR resources may comprise a first SR resource and a second SR resource.

For example, the first SR resource of the two or more SR resources is linked to at least one of a first MCS value, a first TBS value, a first TCI state value, a first buffer size value exceeding a first threshold, a first remaining time value exceeding a second threshold, or a situation that the transmission is present on the CG uplink data channel resources.

Furthermore, the second SR resource of the two or more SR resources is linked to at least one of a second MCS value, a second TBS value, a second TCI state value, a second buffer size value that equals to or is lower than the first threshold, a second remaining time value that equals to or is lower than the second threshold, or a situation that the transmission is absent on the CG uplink data channel resources. The at least one SR resource includes one of the first SR resrouce and the second SR resource.

In this case, based on the one or more characteristic information mentioned above, the user device 110 may select the first SR resource or the second SR resource as the at least one SR to be used.

In some embodiments, the buffer status information may be included in at least one of a Buffer Status Report (BSR) or a Delay Status Report (DSR).

In some embodiments, the user device 110 may be caused to determine whether the transmission on the CG uplink data channel resources is present or absent based on at least one of a status of uplink data to be transmitted, a measurement related to an uplink channel quality, or an occurrence of one or more pre-defined events.

At 620, the user device transmits at least one SR on the selected at least one SR resource.

At 625, the user device may perform the transmission (if present) on the CG uplink data channel resources.

At 630, the network node 120 may determine the SR resources that are transmitted on.

At 635, the network node 120 may determine the at least one characteristic of the CB CG-PUSCH transmission (if present).

At 640, the network node 120 may decode the transmission (if present) or schedule additional resources.

Other details of steps and features of this scheme can be referred to the solutions described in combination with FIG. 3 to FIG. 5, which is not described herein again.

In order to implement the embodiments or the examples of Fig. 6, a computer program comprising instructions, which when executed by the apparatus (e.g., the user device 110 or the network node 120), may cause the apparatus to perform the explained above method (or embodiments). In this case, a computer readable storage medium may have stored thereon the computer program. The computer readable storage medium may be a non-transitory computer readable medium.

In some example embodiments related to FIGs 3 to 6, an apparatus capable of performing any of the method described above (for example, the user device 110 or the network node 120) may comprise means for performing the respective operations of the method described above. The means may be implemented in any suitable form. For example, the means may be implemented in a circuitry or software module. The apparatus may be implemented as or included in the user device or the network node 120.

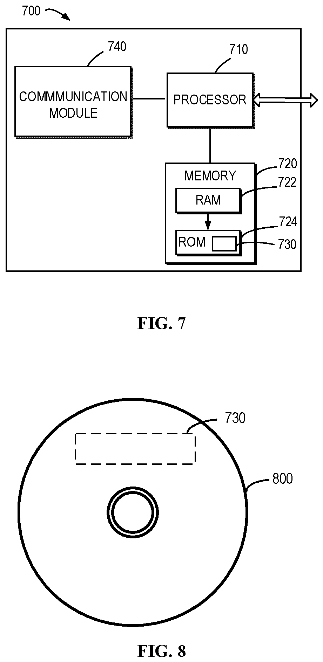

FIG. 7 is a simplified block diagram of a device 700 that is suitable for implementing example embodiments of the present disclosure. The device 700 may be provided to implement a communication device, for example, the user device 110 or the network node 120 as shown in FIG. 1. As shown, the device 700 includes one or more processors 710, one or more memories 720 coupled to the processor 710, and one or more communication modules 740 coupled to the processor 710.

The communication module 740 is for bidirectional communications. The communication module 740 has one or more communication interfaces to facilitate communication with one or more other modules or devices. The communication interfaces may represent any interface that is necessary for communication with other network elements. In some example embodiments, the communication module 740 may include at least one antenna.

The processor 710 may be of any type suitable to the local technical network and may include one or more of the following: general purpose computers, special purpose computers, microprocessors, digital signal processors (DSPs) and processors based on multicore processor architecture, as non-limiting examples. The device 700 may have multiple processors, such as an application specific integrated circuit chip that is slaved in time to a clock which synchronizes the main processor.

The memory 720 may include one or more non-volatile memories and one or more volatile memories. Examples of the non-volatile memories include, but are not limited to, a Read Only Memory (ROM) 724, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random-access memory (RAM) 722 and other volatile memories that will not last in the power-down duration.

A computer program 730 includes computer executable instructions that are executed by the associated processor 710. The instructions of the program 730 may include instructions for performing operations/acts of some example embodiments of the present disclosure. The program 730 may be stored in the memory, e.g., the ROM 724. The processor 710 may perform any suitable actions and processing by loading the program 730 into the RAM 722.

The example embodiments of the present disclosure may be implemented by means of the program 730 so that the device 700 may perform any process of the disclosure as discussed with reference to FIG. 2 to FIG. 6. The example embodiments of the present disclosure may also be implemented by hardware or by a combination of software and hardware.

In some example embodiments, the program 730 may be tangibly contained in a computer readable medium which may be included in the device 700 (such as in the memory 720) or other storage devices that are accessible by the device 700. The device 700 may load the program 730 from the computer readable medium to the RAM 722 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

FIG. 8 shows an example of the computer readable medium 800 which may be in form of CD, DVD or other optical storage disk. The computer readable medium 800 has the program 830 stored thereon.

Generally, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general-purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, although operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, although several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. An apparatus comprising:
at least one processor; and
at least one memory storing instructions that, when executed by the at least one processor, cause the apparatus at least to:
receive a configuration indicating Configured Grant, CG, uplink data channel resources allocated for the apparatus and two or more Scheduling Request, SR, resources associated with the CG uplink data channel resources;
obtain mapping information between the two or more SR resources and at least one of buffer status information or delay status information of the apparatus, at least one of the buffer status information or the delay status information being to be transmitted on the CG uplink data channel resources;
select, from the two or more SR resources, at least one SR resource to be used based on the mapping information and at least one of the buffer status information or the delay status information of the apparatus;
transmit at least one SR on the selected at least one SR resource; and
perform a transmission including at least one of the buffer status information or the delay status information on the CG uplink data channel resources.

2. The apparatus of claim 1, wherein the configuration comprises the mapping information.

3. The apparatus of claim 1 or 2, wherein at least one of the buffer status information or the delay status information is included in at least one of the following:
a Buffer Status Report, BSR, or
a Delay Status Report, DSR.

4. The apparatus of any of claims 1-3, wherein a first SR resource of the two or more SR resources is linked to a first buffer size value exceeding a first threshold and a second SR resource of the two or more SR resources is linked to a second buffer size value that equals to or is lower than the first threshold; and
wherein the selected at least one SR resource includes at least one of the first SR resource or the second SR resource.

5. The apparatus of any of claims 1-3, wherein a first SR resource of the two or more SR resources is linked to a first remaining time value exceeding a second threshold and a second SR resource of the two or more SR resources is linked to a second remaining time value that equals to or is lower than the second threshold; and
wherein the selected at least one SR resource includes at least one of the first SR resource or the second SR resource.

6. The apparatus of any of claim 1-3, wherein the first SR resource of the two or more SR resources is associated with at least one of a first buffer size value or a first remaining time value,
the second SR resource of the two or more SR resources is associated with at least one of a second buffer size value or a second remaining time value, and
the selected at least one SR resource includes at least one of the first SR resource or the second SR resource.

7. The apparatus of any of claims 1-3, wherein
a first SR resource of the two or more SR resources is linked to a first buffer size value exceeding a first threshold and a first remaining time value exceeding a second threshold,
a second resource of the two or more SR resources is linked to a second buffer size value that equals to or is lower than the first threshold and a second remaining time value that equals to or is lower than the second threshold,
a third SR resource of the two or more SR resources is linked to the first buffer size value exceeding the first threshold and the second remaining time value that equals to or is lower than the second threshold,
a fourth SR resource of the two or more SR resources is linked to the second buffer size value that equals to or is lower than the first threshold and the first remaining time value exceeding the second threshold; and
wherein the selected at least one SR resource includes one of the first SR resource, the second SR resource, the third SR resource and the fourth SR resource.

8. The apparatus of any of claims 1-7, wherein the buffer status information comprises one or more buffer status values associated with at least one of the following:
a buffer size of buffered data,
a remaining time of buffered data,
a minimum remaining time associated with buffered data from logical channels, LCHs or logical channel groups, LCGs,
a minimum remaining time associated with buffered data from an LCH or an LCG with the highest priority that is transmitted on the CG uplink data channel resources, or
a buffer size prior to assembly of the transport block transmitted on the CG uplink data channel resources.

9. A method comprising:
receiving, by a user device, a configuration indicating Configured Grant, CG, uplink data channel resources allocated for the apparatus and two or more Scheduling Request, SR, resources associated with the CG uplink data channel resources;
obtaining mapping information between the two or more SR resources and at least one of buffer status information or delay status information of the apparatus, at least one of the buffer status information or the delay status information being to be transmitted on the CG uplink data channel resources;
selecting, from the two or more SR resources, at least one SR resource to be used based on the mapping information and at least one of the buffer status information or the delay status information of the apparatus;
transmitting at least one SR on the selected at least one SR resource; and
performing a transmission including at least one of the buffer status information or the delay status information on the CG uplink data channel resources.

10. The method of claim 9, wherein the configuration comprises the mapping information.

11. The method of claim 9 or 10, wherein at least one of the buffer status information or the delay status information is included in at least one of the following:
a Buffer Status Report, BSR, or
a Delay Status Report, DSR.

12. The method of any of claims 9-11, wherein a first SR resource of the two or more SR resources is linked to a first buffer size value exceeding a first threshold and a second SR resource of the two or more SR resources is linked to a second buffer size value that equals to or is lower than the first threshold; and
wherein the selected at least one SR resource includes at least one of the first SR resource or the second SR resource.

13. The method of any of claims 9-12, wherein a first SR resource of the two or more SR resources is linked to a first remaining time value exceeding a second threshold and a second SR resource of the two or more SR resources is linked to a second remaining time value that equals to or is lower than the second threshold; and
wherein the selected at least one SR resource includes at least one of the first SR resource or the second SR resource.

14. A computer program comprising instructions, which when executed by an apparatus, cause the apparatus to perform the method of any of claims 9 to 13.

15. A computer readable medium having stored thereon the computer program of claim 14.
